# EUROPEAN PATENT SPECIFICATION

(11) **EP 1 549 451 B1**
(45) Date of publication and mention of the grant of the patent: **22.08.2007**
(21) Application number: 03759219.3
(22) Date of filing: 03.09.2003
(51) Int. Cl.: B23B 29/034, B23D 77/04, B23Q 1/48

(54) **TOOL WITH SELECTIVELY BIASED MEMBER AND METHOD FOR FORMING A NON -AXIS SYMMETRIC FEATURE**
WERKZEUG MIT GEZIELT VORGESPANNTEM GLIED UND VERFAHREN ZUR HERSTELLUNG EINES NICHT ACHSENSYMMETRISCHEN MERKMALS
OUTIL DOTE D'UN ELEMENT AUQUEL PEUT ETRE APPLIQUEE UNE CONTRAINTE SELECTIVE, ET PROCEDE POUR PRODUIRE UNE FORME SANS SYMETRIE AXIALE

(30) Priority: 03.09.2002 US 407872 P
(43) Date of publication of application: 06.07.2005
(73) Proprietor: Weidmer, Stan C., Mason, OH 45040 (US)
(72) Inventor: Weidmer, Stan C., Mason, OH 45040 (US)
(74) Representative: Casey, Lindsay Joseph
(86) International application number: PCT/US2003/027247
(87) International publication number: WO 2004/022271

(56) References cited:
- DE-A- 3 408 352
- DE-A- 4 124 538
- US-B1- 6 270 295

## Description

### Background of the Invention

USP 6,270,295 describes a tool with a selectively biased member and method of using the tool. In one or more embodiments disclosed therein, the radial position of a blade carried on the end of a rotating tool, such as a reamer or a boring bar, is controlled by fluid pressure. In particular, fluid pressure is applied to an internal bore or cavity to effect radial movement of the blade in order to control the diameter of the hole being bored.

One of the methods disclosed in USP 6,270,295 of using one of the embodiments of the tool involves controlling the blade position based on the axial position of the blade. This method produces an axis symmetrical bore. Figs. 9, 10 and 11 of USP 6,270,295 illustrate a method which compensates for material deformation in a workpiece. The specific method described in relation to these figures addresses axial deformation in a bore, in which the workpiece bows inward near the top of the hole due to material properties inherently in the workpiece.

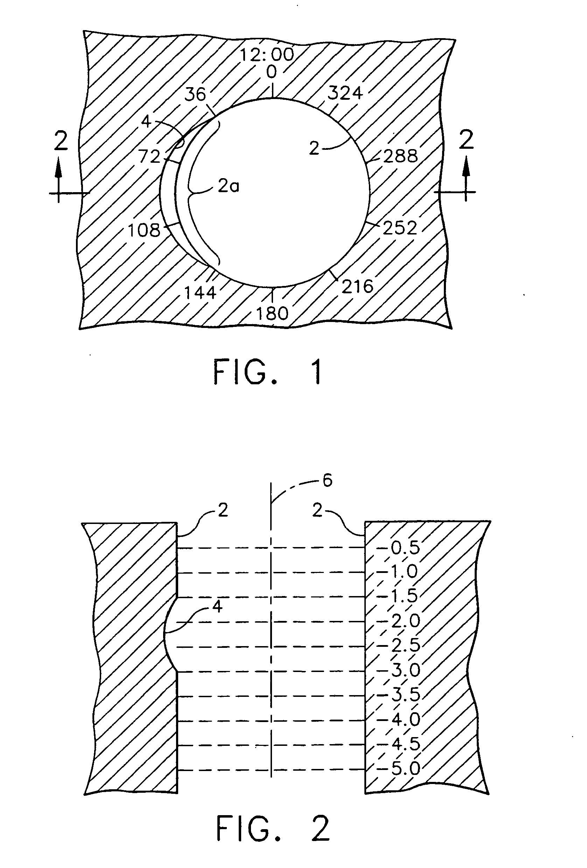

An error can also present itself in which the radius/diameter of the bore is not constant based on angular position. Fig. 1 is a diagrammatic top view of a non-axis symmetric bore 2 in which the radius/diameter is not constant, varying based on angular position. In Fig. 1, non-axis symmetric arc 4, shown as a localized void of material extending outwardly from 36 ° to 144°, deviating from the perfectly circular bore represented by arc 2a. Non-axis symmetric arc 4 may alternatively protrude into the bore 2. As seen in Fig. 2, which is a fragmentary, diagrammatic side view of bore 2 taken along line 2-2 of Fig. 1, non-axis symmetric arc 4 may be located at any position along axis 6 of bore 2, and does not have to be longitudinally constant.

There are three basic sources of the error. 1) the non-axis symmetric arc 4 may result from manufacturing error in which a perfectly circular bore is not formed; 2) the bore may become deformed as a result of assembly, such as by way of example, distortion in a cylinder bore when the bolts holding the cylinder head are tightened, even if within specification; and 3) thermal distortion.

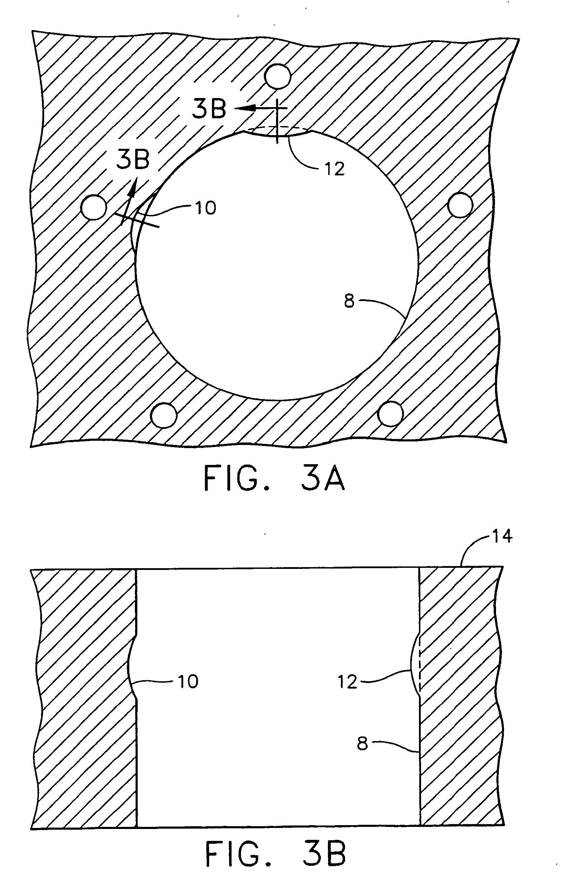

Figs. 3A and 3B diagrammatically illustrate top and side views, respectively, of a cylinder bore 8 showing distortion occurring due to assembly. There is illustrated concave portion 10 extending outwardly and convex portion 12 extending inwardly, both of which are spaced down from surface 14 and occupy different angular positions, although at the same axial location.

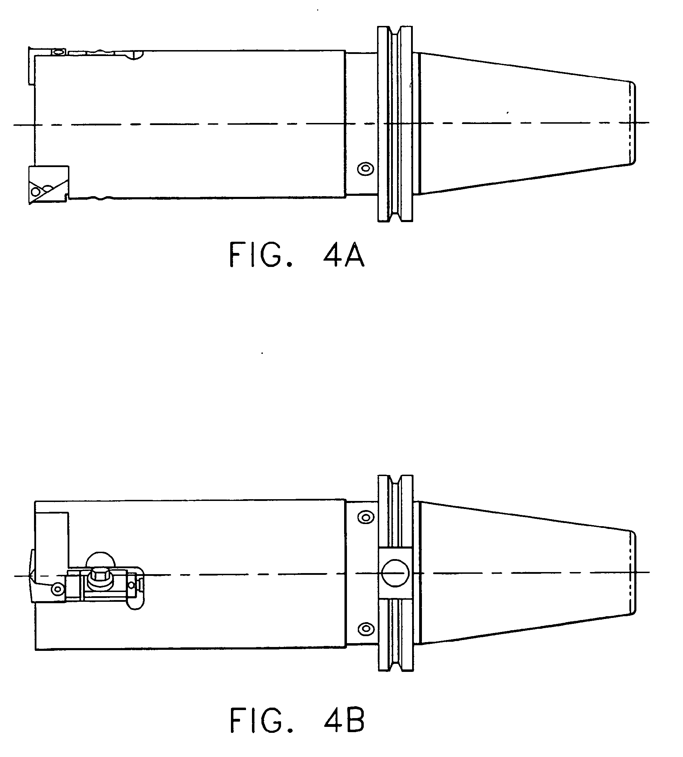

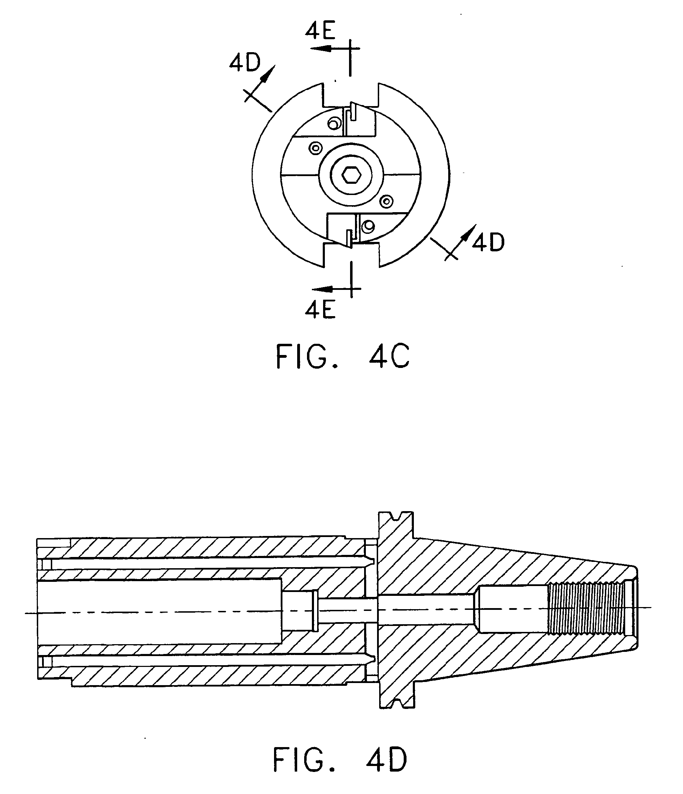

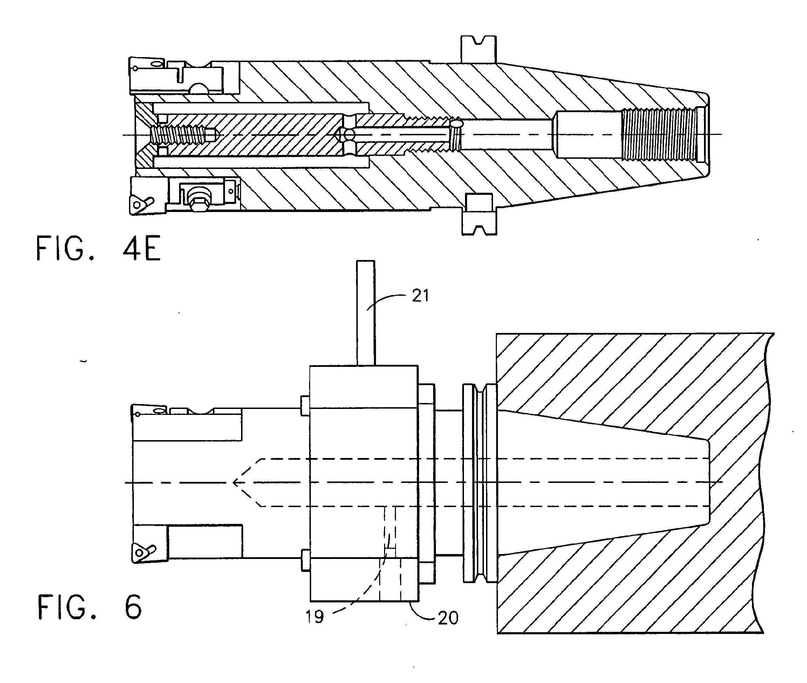

Such error can be directly addressed by use of the tools and methods disclosed in United States Patent 6,270,295, within the scope of the claims thereof. Figs. 4A-E illustrate an embodiment of the tool, similar to the embodiments described in United States Patent 6,270,295.

German Patent Specification no DE-A- 41 24 538 discloses a cutter assembly that can be used to produce parts with elliptical or non-concentric bores or outer surfaces. It consists of a cutter rotated via a coupling by a motor. The cutter sits in a holder which is housed within a cylinder. The bore housing holder is not concentric with the cylinder outer surface. When the cylinder is rotated by motor, the axis of the cutter is moved radially. The cutter is advanced toward the work face by a screw driven by motor.

DE-3408352-A discloses a tool according to the preamble of claim 1*.*

### Summary Of The Invention

The present invention is defined in claim 1.

By selectively controlling the biasing of a tool with a selectively biasable member based on angular orientation of the tool, the blade or other operable surface can be controlled to desired positions based on angular orientation to over come the error. For example, an non-axis symmetric area may intentionally be introduced into a bore or other formed configuration in order to overcome errors induced by material properties, by manufacturing, by assembly, or by thermal distortion.

### Brief Description of the Drawing

The accompanying drawings incorporated in and forming a part of the specification illustrate several aspects of the present invention, and together with the description serve to explain the principles of the invention. In the drawings:

Fig. 1 is a diagrammatic top view of a non-axis symmetric bore.

Fig. 2 is a fragmentary, diagrammatic side view of the bore of Fig. 1 taken along line 2-2 of Fig. 1.

Figs. 3A and 3B are diagrammatic top and side views, respectively, of a bore showing distortion occurring due to assembly.

Figs. 4A-E illustrate an embodiment of a tool with selectively biasable members, similar to the embodiments described in United States Patent 6,270,295.

Fig. 5 diagrammatically illustrates coolant fluid pressure vs. angular orientation.

Fig. 6 diagrammatically illustrates a non-rotating sleeve vent block.

Figs. 7A and 7B diagrammatically illustrate an "unwrapped" sleeve representing about 270° of the full 360° wrap angle.

Fig. 8 diagrammatically illustrates another embodiment of a sleeve which includes a plurality of discrete slots.

Fig. 8A is an enlarged, fragmentary cross sectional view taken along line 8A-8A of Fig. 8 illustrating an embodiment of a slot having an angled edge.

Fig. 9 diagrammatically illustrates a wave shaped vent path formed in a sleeve.

Fig. 10 diagrammatically illustrates an unwrapped sleeve 34 which presents only an one sided vent path.

Fig. 11 diagrammatically illustrates an axially moveable sleeve.

Fig. 12 diagrammatically illustrates another embodiment of an axially moveable sleeve.

Fig. 13 diagrammatically illustrates another embodiment of an axially moveable sleeve.

Fig. 14 diagrammatically illustrates another embodiment of cooperating vents and sleeve.

Fig. 15 diagrammatically illustrates an embodiment in which precision jets are disposed as the vent exits.
Fig. 101-117 illustrate a tool known from US-6270 295-A.

Reference will now be made in detail to the present preferred embodiment of the invention, an example of which is illustrated in the accompanying drawings.

### Detailed Description Of Embodiments Of The Invention

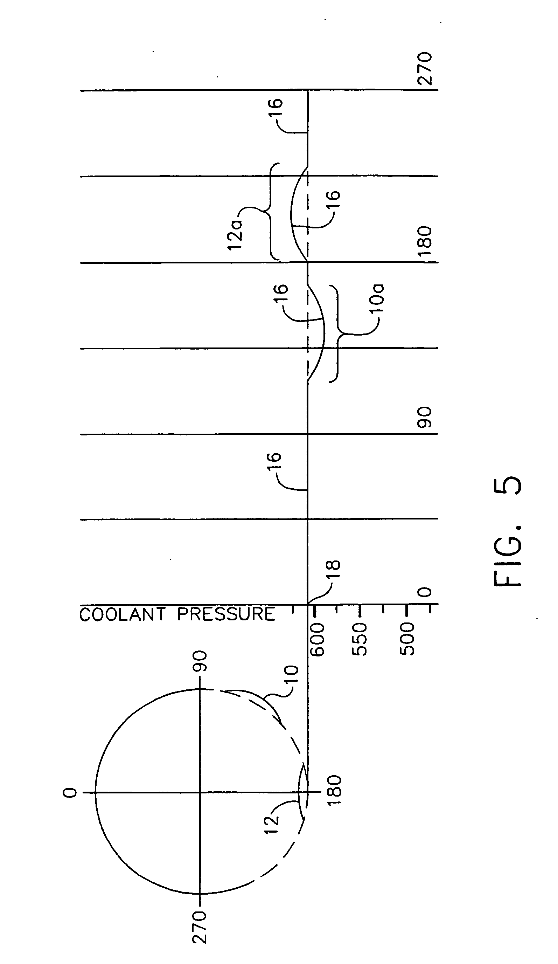

In order to compensate for protruding portion 10, as shown in Figs. 3A and 3B, less material needs to be removed in the angular and axial region corresponding to portion 10. Similarly, more material needs to be removed in the angular and axial region corresponding to portion 12. Referring to Fig. 5, the corresponding coolant fluid pressure is illustrated at line 16. As illustrated, a nominal coolant pressure indicated at 18, slightly above 600 PSI, is the pressure necessary to maintain the blade at the nominal diameter. In order to remove less material at portion 10, the pressure is reduced at area 10a, causing the radius of the arc traveled by the blade to decrease, thereby removing less material. Similarly, in order to remove more material at portion 12, the pressure is increased in area 12a, causing the radius of the arc traveled by the blade to increase, thereby removing more material. As is inherently apparent in Fig. 5, the timing of the pressure change at areas 10a and 12a do not exactly correspond to the location of portions 10 and 12, but instead lag the actual timing of the pressure changes. FIG. 5A diagrammatically illustrates the pressure changes as more closely corresponding to the locations of portions 10 and 12.

In order to control the pressure accurately, to obtain the necessary frequency and timing response, coolant is selectively allowed to flow or vent from the tool. Although there are many ways to effect such flow control, such as electronically, in the embodiments disclosed herein, one or more vents are formed through the circumferential surface tool itself, in communication with one or more internal cavities within the tool, and the vents are selectively covered and uncovered in order to allow fluid to flow from the internal cavities, thereby immediately affecting the fluid pressure within the tool itself and concomitantly the biasing delivered to the tool and location of the blade.

In the depicted embodiments, flow from the vents is achieved by disposing one or more selectively located vent bocks, in the form of a sleeve, proximal the tool circumferential surface, and selectively covering or uncovering all or portions of the vents, thereby increasing or decreasing the coolant pressure. The vents may be formed in the tool in a wide variety of angular and axial locations. The vent blocks cooperate with the vents to form a controlled valve through which fluid flows.

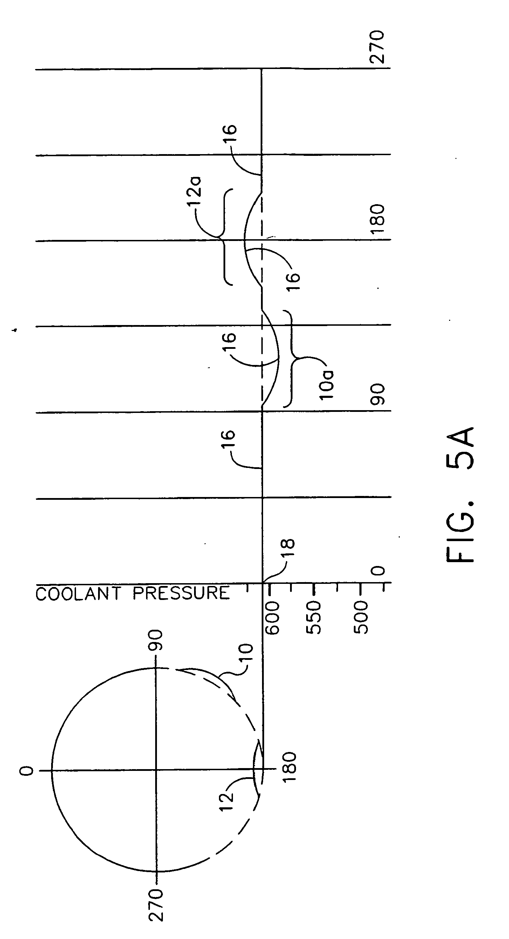

In one embodiment, a single axially extending column of a plurality of vents may be disposed in the circumferential surface of the tool, and selectively covered and uncovered at the appropriate angular position by alignment with a vent block to effect the desired biasing. In such an embodiment, as diagrammatically illustrated in Fig. 6, the vent block is a non-rotating sleeve 20 disposed about and adjacent the tool circumferential surface with a torque stop 21, with an appropriately configured corresponding vent path 19.

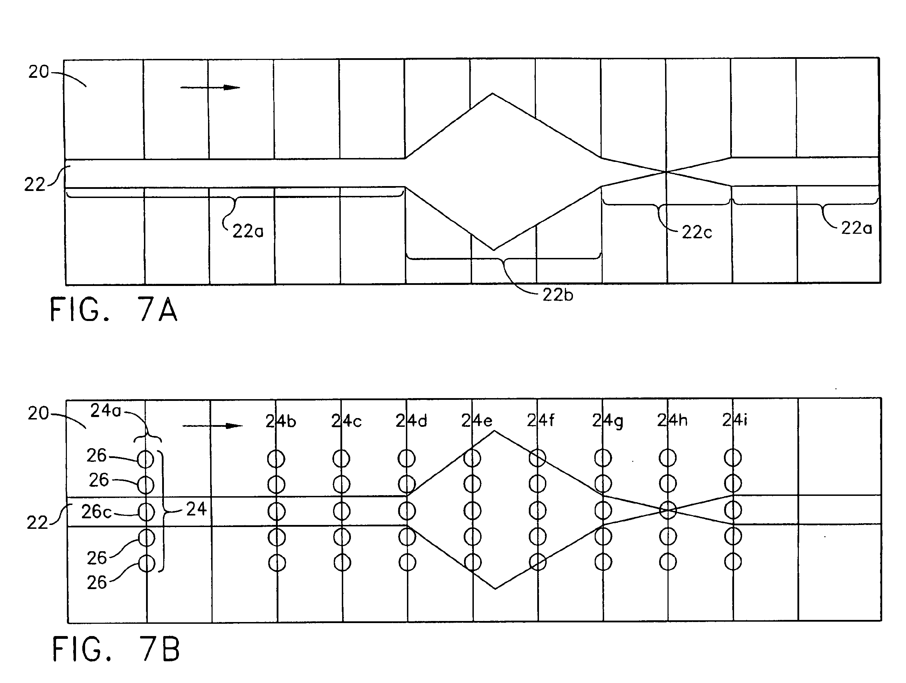

Referring to Figs. 7A and 7B, an "unwrapped" sleeve 20 is diagrammatically shown representing about 270° of the full 360° wrap of sleeve 20. Sleeve 20 is actually cylindrical and fits around a corresponding portion of the tool, proximal the vents. Vent path 22 includes a constant, nominal pressure portion 22a, a decreased pressure portion 22b and an increased pressure portion 22c. Fig. 7B diagrammatically illustrates uncovering and covering of single column 24 of a plurality of axially aligned vents 26. As the tool rotates, the single column 24 travels through positions 24a-i relative to sleeve 20. As is illustrated, from 24a to 24d, only a single vent, vent 26c, is uncovered by sleeve 20, which is aligned with vent path 22. In this depiction, vent 26c being uncovered maintains the coolant pressure at the desired nominal pressure to maintain the biasing at the nominal level to maintain the blade at the nominal position. At 24d, vent path 22 begins to diverge into portion 22b. As the tool rotates, and column 24 advances to position 24e, additional vents are uncovered, reducing the coolant pressure. With further rotation, the vents become covered again, and at 24g, only vent 26c is uncovered. From 24g to 24h, vent 26c becomes covered, when column 24 is aligned with portion 22c, increasing the coolant pressure. At 24i, only vent 26c is uncovered, and nominal pressure is maintained until column 24 reaches 24d during the subsequent revolution.

As will be appreciated, it is necessary for the coordination between the vents and the vent path to produce proper timing of the biasing, including appropriate lead time, so that the desired amount of material is removed at the desired angular orientation to produce the non-axis symmetric feature, in this example, a bore.

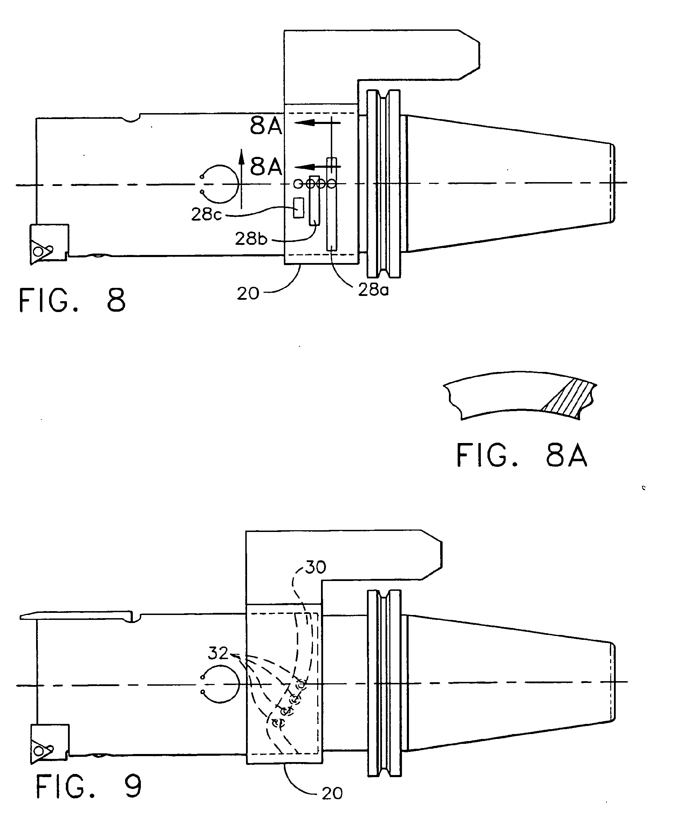

Fig. 8 diagrammatically illustrates another configuration for sleeve 20, which includes a plurality of discrete slots 28a-c. In this illustration, four vents 30 are illustrated. Slots 28a-c may be aligned with specific axially aligned vents, or may uncover adjacent vents. The respective arcuate lengths of slots 28a-c are dictated by the desired pressure profile (pressure and timing) of the coolant needed to produce the desired non-axis symmetric feature. Fig. 8A, taken along line 8A-8A of Fig. 8, illustrates an embodiment of slot 28a, showing an angled edge, which is configured based on producing the desired pressure profile, meeting the normal, well known control requirements for dampening, undershoot, overshoot, etc. It is noted that it is preferred that a nominal level of coolant venting be available for control to allow for increasing and decreasing the biasing force on the tool, and to provide a pressure range suitable to "spike" the pressure in order to achieve the desired pressure level and response to move the controlled member of the tool (in the depicted embodiment, the blade) to the desired position at the desired orientation, as well as to provide a pressure range suitable to drop the pressure sharply to effect the same response in opposite direction.

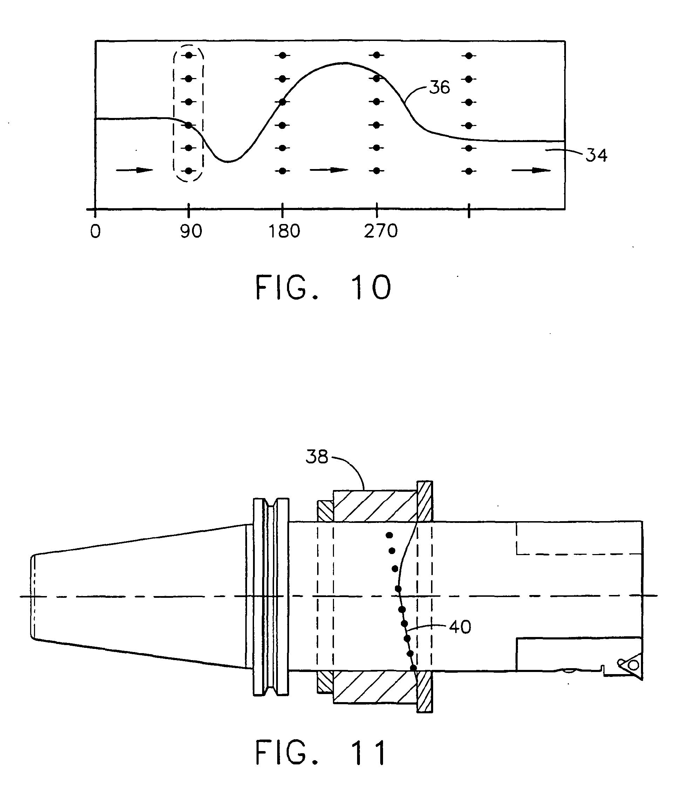

Any suitable number and orientation of vents and sleeve or, more generally, vent block configurations may be used to produce the desired pressure profile. Fig. 9 diagrammatically illustrates a "wave" shaped vent path 30 formed in sleeve 20, with a plurality of non-axially aligned vents 32. Fig. 10 diagrammatically illustrates an "unwrapped" sleeve 34 which presents only an one sided vent path, where one edge 36 of sleeve 34 is curved such that sleeve 34 blocks only those vents below (in the figure) edge 36.

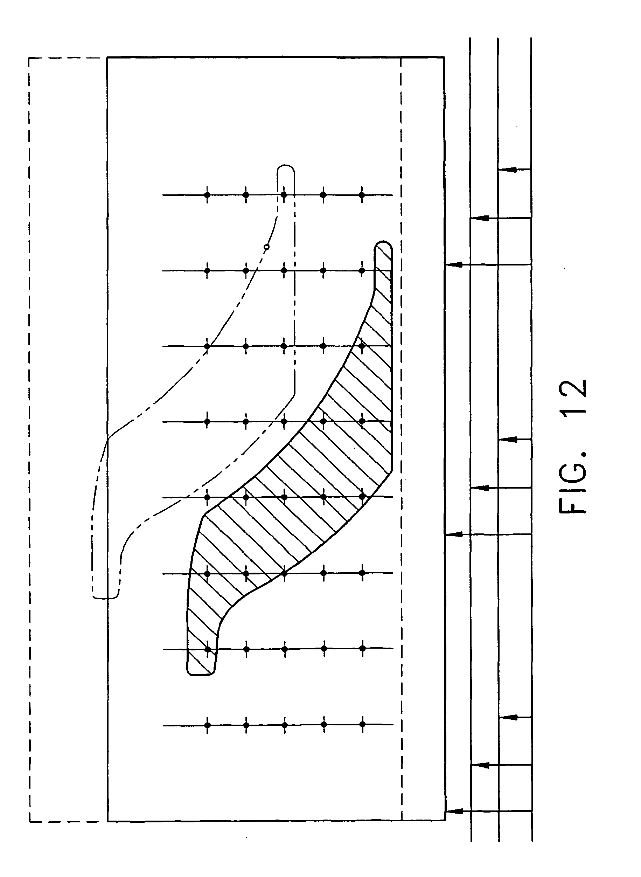

Fig. 11 diagrammatically illustrates another configuration of vents and sleeve in which a plurality of vents are circumferentially disposed about an arcuate portion of the tool, with the vent centers not circumferentially axially aligned (although there may be circumferential axial overlap of the width of the vents). Sleeve 38 includes arcuate edge 40 configured to produce the desired pressure profile. In this embodiment, sleeve 38 is axially moveable, which affects the coolant pressure not only based on angular position of the tool, but on axial location of sleeve 38. With this embodiment, the angular biasing can be completely disabled while boring by moving sliding sleeve 38 to an appropriate position, at which none of the vents are uncovered, or conversely where all vents are uncovered, in either case providing constant biasing throughout the angular orientation of the tool. When a depth is reached at which a non-axis symmetric feature is desired, sleeve 38 can be moved axially into the appropriate position. The amount of biasing can be introduced slowly, i.e., "feathered" in so as not to produce a step in the bore (unless desired). Fig. 12 diagrammatically illustrates another embodiment with a different vent and vent path arrangement and sleeve design, in which the sleeve may be displaced axially.

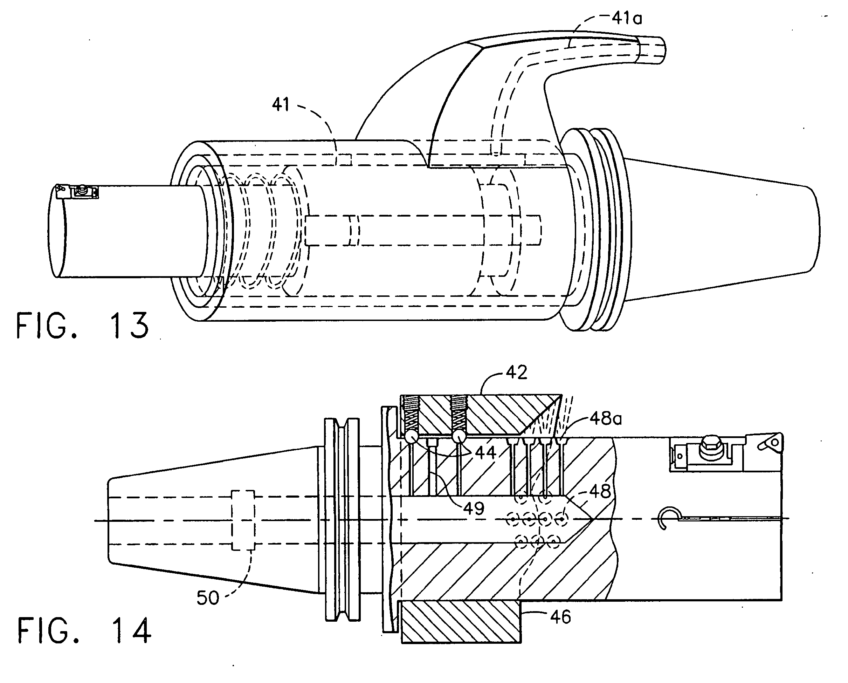

Fig. 13 diagrammatically illustrates another axially moveable sleeve 41, whose axial position may be controlled by fluid pressure through internal passageway 41a. As can be seen, yet another vent and vent block arrangement is depicted.

Fig. 14 diagrammatically illustrates another configuration of cooperating vents and sleeve 42. Rollers 44 in annular tracks may be used to locate sleeve 42 axially. Arcuate edge 46 controls the coolant back pressure and concomitantly the biasing of the tool. In this configuration, a plurality of vents 48 are grouped as shown, axially aligned in three columns, and circumferentially overlapping. Fig. 14 includes vent 49 which delivers fluid pressure to create a hydraulic bearing between the tool and sleeve. Fig. 14 illustrates a cross sectional shape for vents, such as at 48a, and an undercut 42a in sleeve 42, all configured to provide the desired coolant flow and press profile required to produce the desired angular dependant biasing of the tool. As will be readily appreciated, in addition to the location and grouping of vents, all physical characteristics of the vents, such as the number of vents, angle of the vents, vent diameter, cross sectional shape, shape and length of the ports leading to the vents, etc., are relevant to the dynamics of the closing and opening of the vents which act as valves, affecting coolant fluid flow therethrough. Because the vent diameters are small, filter 50 is provided on the coolant fluid inlet end of the tool in the embodiment depicted in Fig. 14.

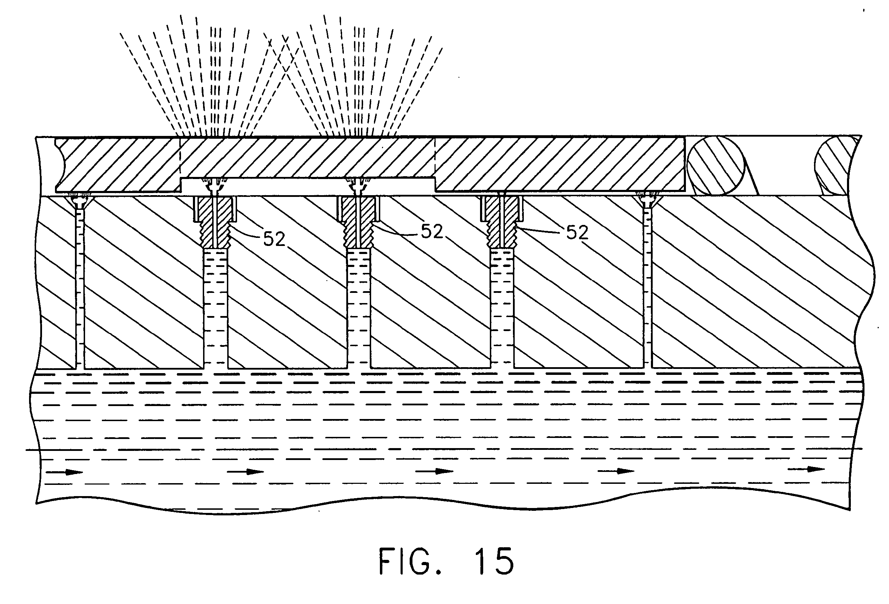

Fig. 15 diagrammatically illustrates a vent embodiment in which precision jets 52 are disposed as the vent exits. As will be readily appreciated, there are numerous venting and vent blocking techniques.

**The Tool**

Neither the description relating to "The Tool" nor figures 101-117 form part of the present invention but represent background art useful for understanding the invention.

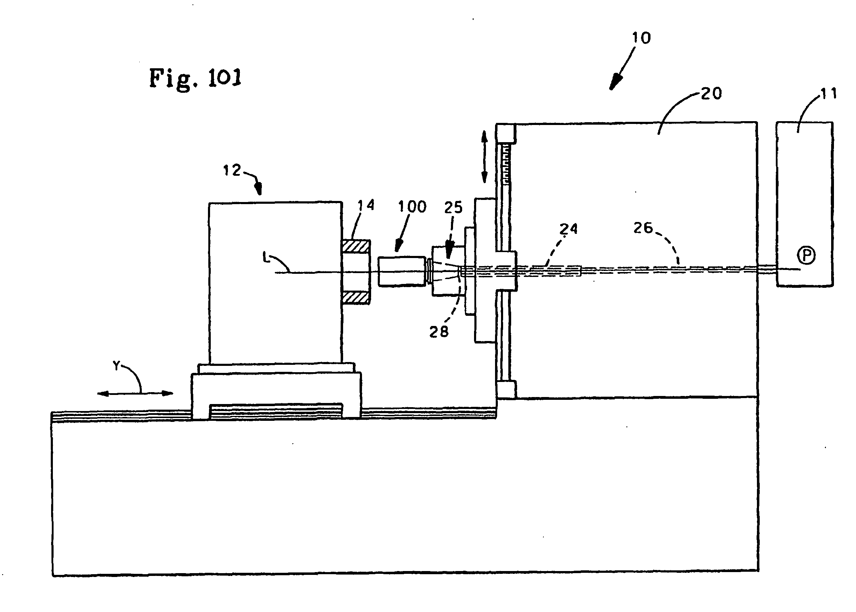

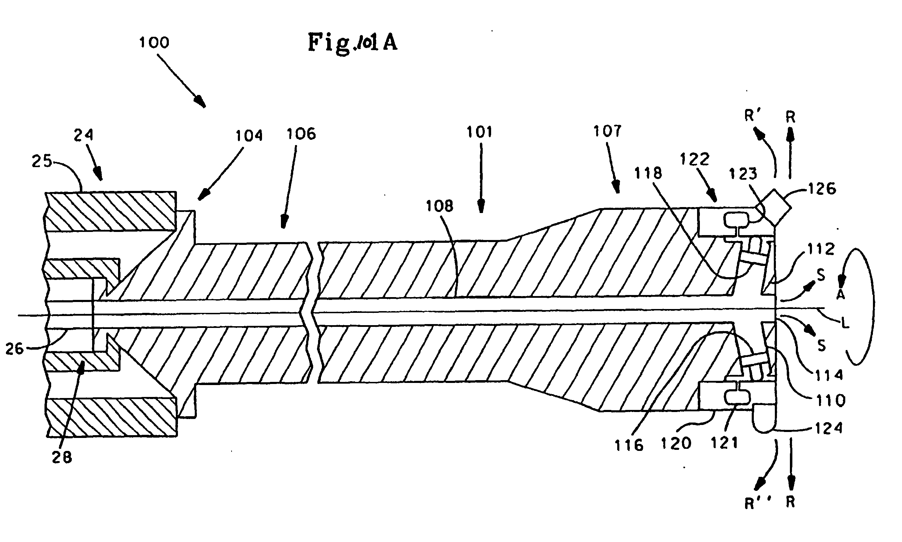

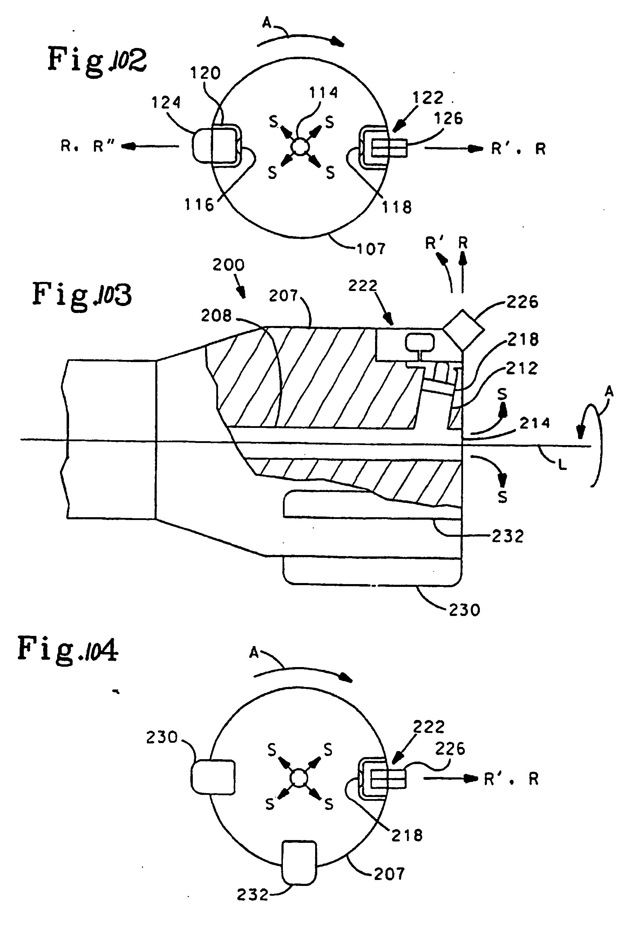

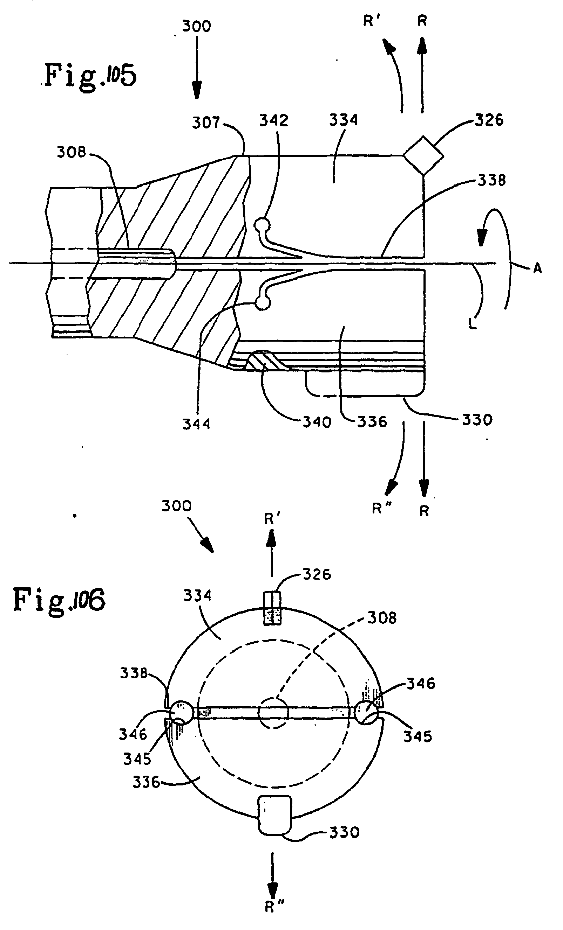

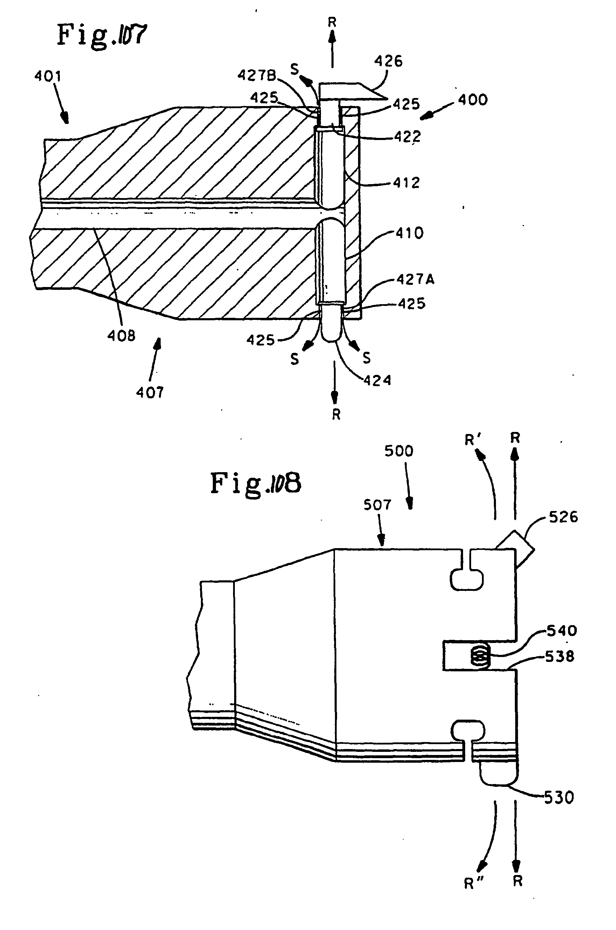

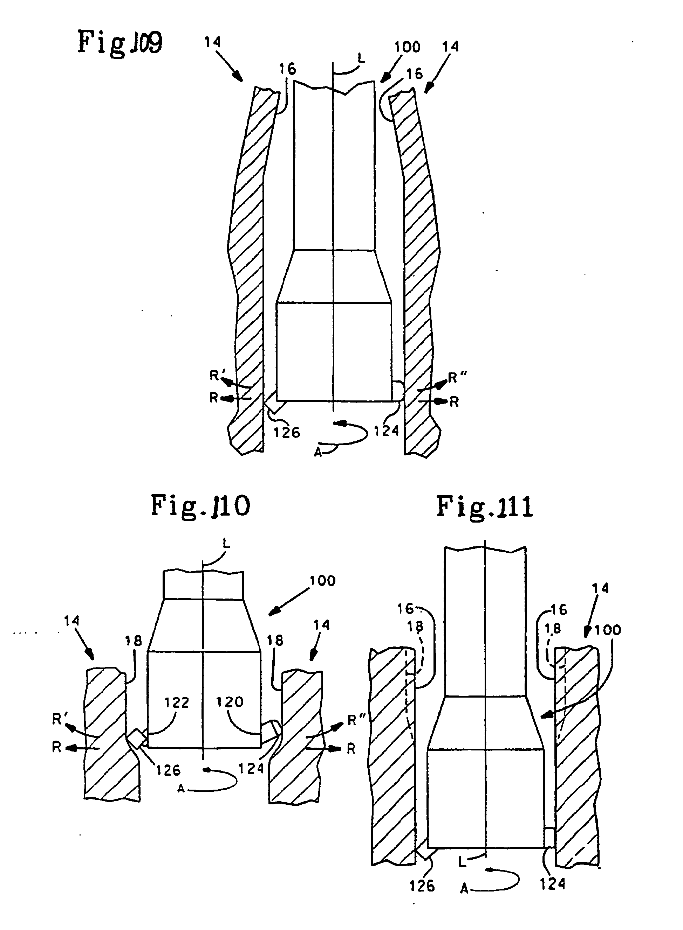

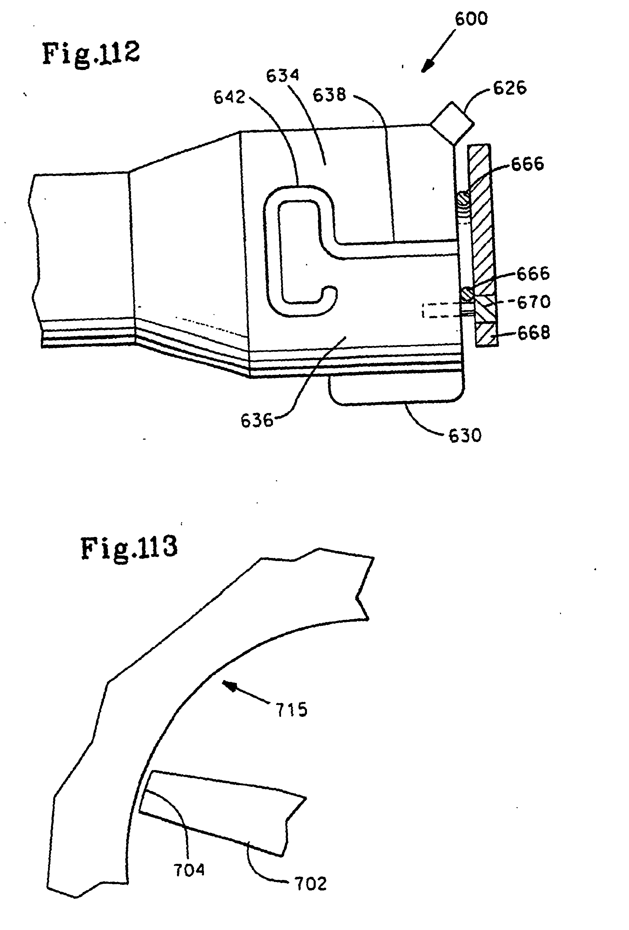

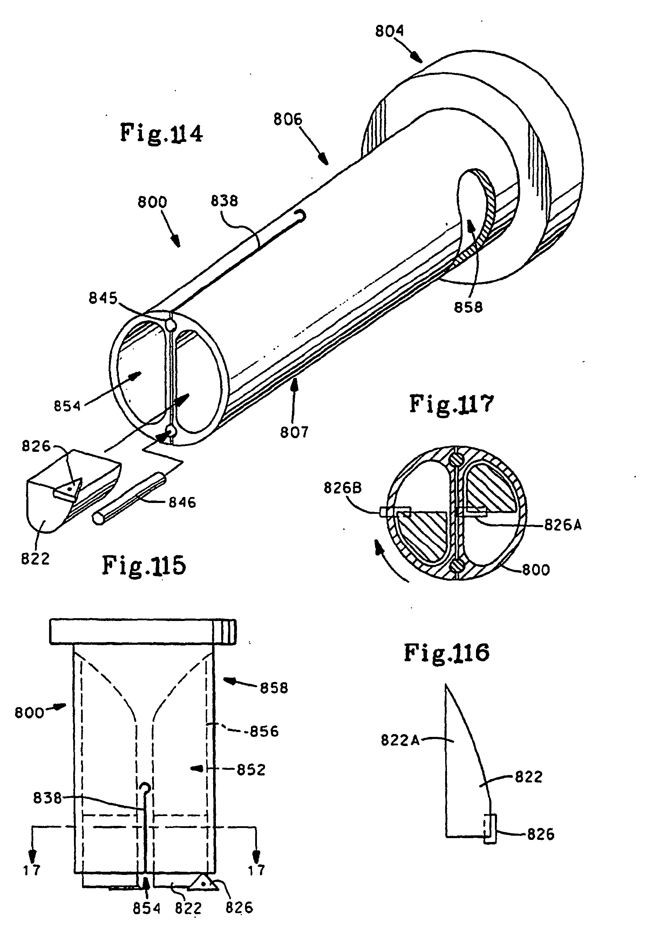

The selectively biasable tool and method described in United States Patent Number 6,270,295 is set forth explicitly in this section titled "The Tool". References in this section titled "The Tool" to figures 101-117 correspond to figures 1-17 of United States Patent Number 6,270,295, respectively. Although the reference numerals in this section titled "The Tool" which are used to identify items disclosed within figures 101-117 overlap with the reference numerals used in this application with respect to figures 1-15 hereof, the reference numerals used in this section titled "The Tool" refer to items in figures 101-117.

This section "The Tool" is directed to a tool with a support member for supporting the tool relative to a workpiece, such as a gun reamer, more particularly directed to a tool with a support member for supporting a tool inside a workpiece, wherein the support member is biased and the location of the support member and the workpiece is determined at least in part by the bias of the support member.

A conventional gun reamer tool includes a cutting blade and one or more support members which are supported at intervals around the circumference of a rotary shaft (e.g., the reamer head). The shaft, along with the blade and the support members, rotate so that the physical interference between the rotating blade and the workpiece cause a hole to be either bored or reamed in the workpiece. During this machining operation, the rotating support members are positioned so that they support the inside surface of the hole being machined (e.g., either reamed or bored) by constraining radially directed motion of the blade relative to the workpiece.

In some conventional machining center rotating machine tools, lubricant is supplied to the vicinity of the cutting blade through the rotating shaft. An example is shown in U.S. Pat. No. 5,775,853 issued on Jul. 7, 1998, the disclosure of which is herein incorporated by reference.

This support and constraint supplied by the support members help to control the shape (e.g., cylindricity or circularity) of the hole, and help to maintain a constant alignment of the central axis of the hole along the length of the hole (in other words, the hole is straighter). For this reason, gun reamers are often used in applications where holes need to be precisely and accurately machined. Such precision applications may also be needed in the manufacture of automobile parts such as cylinder bores in engine blocks, connecting rod bores and piston wrist pin bores.

Gun reamers are also especially useful where the hole being cut is relatively long (such as the bore of a gun barrel), because the support members will remain in the proximity of the cutting blade, even when the blade has cut a long distance into the workpiece.

One potential shortcoming of conventional gun reamers is that they cannot be adjusted to cut holes of different sizes. Most conventional gun reamers are designed with support and blade members rigidly constrained to the reamer head so that the head can cut holes of just one predetermined radius. Another potential shortcoming of conventional gun reamers is that the blade and support members wear at different rates, which can cause seizure or variation in the diameter and/or circularity of the holes cut by the gun reamer.

In most machine tool operations, including boring and reaming, the friction between the tool and workpiece generates tremendous amounts of heat energy, which can reach temperatures of 2000°F (1100°C) and above. If left uncontrolled, such heat could severely damage (e.g., cracking or fracturing) the tool, thus reducing its tool life, making machine tool operations more dangerous and expensive, and reducing the quality and precision of the workmanship. In addition, heat generated friction can discolor the workpiece, and can damage or remove temper or heat treatments. It is commonly known in the industry that coolant can be introduced to the machining area, such as by spraying, to reduce friction between the tool and workpiece by providing coolant fluid between the cutting tool and the workpiece, and to help remove heat energy generated in machine tool operations.

Although coolant fluid can be supplied to the machining area, it is often difficult to insure that such fluid actually makes its way to the interstices between the tool and all of the workpiece surfaces being machined. Additionally, fluid can evaporate quickly due to the high temperatures involved in machining operations. Thus, larger volumes of coolant fluid must generally be continuously supplied to the machining area for the tool to operate effectively. This need to keep coolant fluid between the tool and wall of the bore hole becomes even more problematic in operations where coolant fluids cannot be introduced in close proximity to the machining areas while the tool is engaged with the interior surface of the workpiece.

During use, the work engaging surface of the tool (e.g., the cutting blade and/or support member) can also become loaded with particles or recently cut chips from the interior surface of the workpiece, which in turn, reduces the accuracy and effectiveness of the tool through deteriorating machining ability, and/or clogging of conventional coolant fluid supply openings. It is obviously preferred that the potential for this undesired loading of particles be reduced, and that any loaded particles be removed from the tool as quickly as possible. Typically, nozzle arrangements, such as an external cleaning jet, are provided independent of the tool, for injecting coolant fluid at increased velocities toward the work engaging surface and the work surfaces of the workpiece to wash away particles, to remove particles already loaded on the work surface, and to cool the tool and the workpiece. As mentioned before, it is often very difficult to insure that the fluid sprayed in this way actually reaches the most critical areas of the tool/workpiece interface.

Other attempts to deliver coolant fluid to the machining area have included air or other pneumatic carriers. As with externally applied liquid coolants, when pneumatic carriers are used, resulting turbulence can hinder the machining operations, and often fluid cannot infiltrate into the actual machining area. Previously, attempts to address these two requirements of cooling and cleaning the tool and workpiece have tended to reduce the accuracy and utility of the tool.

As can be seen, currently available tools have a number of shortcomings that can greatly reduce the accuracy of the tools, the tool's life, and its ability to use these tools with automatic tool changing systems. The current structures and assemblies provide a tool having working surfaces that cannot expand to accommodate varying and different uses and needs. Such assemblies can result in uneven machining, and reduces the assembly's usable life. A need currently exists in the machinery industry for a tool with a work engaging assembly having accurately controlled machining diameters so that holes of different sizes can be cut, so that tools cannot become oversized a result of excessive strokes of the tools, and so that the tool can expand in a radial direction uniformly and selectively.

It is an object of the invention disclosed and described in United States Patent Number 6,270,295 to provide a cutting tool that addresses and overcomes the above-mentioned shortcomings and problems in the machine tool industry.

It is another object of the invention disclosed and described in United States Patent Number 6,270,295 to provide a cutting tool with support members to support a workpiece, where the support member and/or a blade member are selectively biased.

It is another object of the invention disclosed and described in United States Patent Number 6,270,295 to provide a cutting tool whereby the relative position of the blade and the workpiece can be controlled by the selective control of the bias of the blade member and/or support member.

It is yet another object of the invention disclosed and described in United States Patent Number 6,270,295 to provide a cutting tool that has an increased tool life.

It is also an object of the invention disclosed and described in United States Patent Number 6,270,295 to provide a tool that eliminates the need for external coolant fluid jets for cleaning or removing loaded particles from the tool's machining surface during use, and routes fluid in close proximity to the work engaging surface to wash away recently cut particles.

It is yet another object of the invention disclosed and described in United States Patent Number 6,270,295 to provide a tool where the workload is reliably distributed over substantially the entire work engaging surface.

It is another object of the invention disclosed and described in United States Patent Number 6,270,295 to provide a tool for accurately and uniformly machining a workpiece.

It is further an object of the invention disclosed and described in United States Patent Number 6,270,295 to provide a tool that can be selectively adjusted during machine operations.

Yet another object of the invention disclosed and described in United States Patent Number 6,270,295 is to provide a tool that can compensate for material deformation in a workpiece.

It is still another object of the invention disclosed and described in United States Patent Number 6,270,295 to provide a tool in which coolant fluid delivery to the working area is not inhibited while the tool is engaged with a surface of the workpiece.

A further object of the invention disclosed and described in United States Patent Number 6,270,295 is to provide a tool that can compensate for wear and tear.

It is yet an object of the invention disclosed and described in United States Patent Number 6,270,295 to provide a tool that can be used with a quick change or automatic changeable tool system having a fluid pressure source.

Still another object of the invention disclosed and described in United States Patent Number 6,270,295 is to provide a tool that can be used to machine holes of different or varying diameters.

It is a further object of the invention disclosed and described in United States Patent Number 6,270,295 to provide a tool that continuously, selectively, and controllably delivers coolant fluid to the machining area despite the type of tool engagement.

Yet another object of the invention disclosed and described in United States Patent Number 6,270,295 is to provide a tool which self regulates itself for wear and tear on the abrasive.

Still a further object of the invention disclosed and described in United States Patent Number 6,270,295 is to provide a device where the work engaging surface can be uniformly varied in a radial direction by selectively applying fluid pressure.

A further object of the invention disclosed and described in United States Patent Number 6,270,295 is to provide a tool that dissipates thermal energy generated in the machining operations, and reduces thermal expansion of the tool.

Additional objects, advantages and other features of the invention will be set forth and will become apparent to those skilled in the art upon examination of the following, or may be learned with practice of the invention.

In some preferred embodiments of the invention disclosed and described in United States Patent Number 6,270,295, the support member and/or blade member of the cutting tool can be selectively biased by selecting the fluid pressure of a fluid which bears on the support member and/or blade member. For example, the tool may be constructed so that pressurized lubricating fluid, which is supplied near or in the vicinity of the cutting blade, bears on and biases both the blade member and the support member. As another exemplary alternative, the blade member and/or the support member may be selectively biased by air pressure and/or by one or more springs.

In some preferred embodiments of the invention disclosed and described in United States Patent Number 6,270,295, the tool is a reamer which has at least one support member and a blade member, such as a blade cartridge, biased by selectively pressurized fluid. It is an advantage of these preferred reamer embodiments that the fluid pressure can be selected to compensate for wear of the blade, and also to compensate for the difference in wear between the blade and the support member.

In some preferred embodiments of the invention disclosed and described in United States Patent Number 6,270,295, the tool is a reamer where both the blade member and the support members are biased by selectively pressurized fluid. In these preferred reamer embodiments, the fluid pressure can be selected to control the diameter of the hole so that a single reamer can ream holes of different diameters. Also, the fluid pressure can be selected to compensate for wear of the cutting blade. Also, the fluid pressure can be selectively controlled as the hole is being reamed to control the longitudinal profile of the hole, or to compensate for workpiece deformation which can occur as the hole is reamed.

The invention disclosed and described in United States Patent Number 6,270,295 as set forth in the this section titled "The Tool" can be more fully understood when viewed in connection with the drawings in which:

FIG. 101 shows a schematic elevational view of a machining center and tool of the invention disclosed and described in United States Patent Number 6,270,295 with through spindle coolant fluid communication between a tool of the invention disclosed and described in United States Patent Number 6,270,295 and a fluid supply;

FIG. 101A is a longitudinal, cross-sectional view of a tool according to the invention disclosed and described in United States Patent Number 6,270,295;

FIG. 102 is an end view of the tool of FIG. 101;

FIG. 103 is a longitudinal view of an alternative embodiment of a tool according to the invention disclosed and described in United States Patent Number 6,270,295, which is shown partially in cross-section;

FIG. 104 is an end view of the tool of FIG. 103;

FIG. 105 is a longitudinal view of an alternative embodiment of a tool according to the invention disclosed and described in United States Patent Number 6,270,295, which is shown partially in cross-section;

FIG. 106 is an end view of the tool of FIG. 105;

FIG. 107 is a longitudinal view of another alternative embodiment of a tool according to the invention disclosed and described in United States Patent Number 6,270,295;

FIG. 108 is a longitudinal view of yet another embodiment of a tool according to the invention disclosed and described in United States Patent Number 6,270,295;

FIG. 109 shows the tool boring a hole in a workpiece;

FIG. 110 shows the tool boring a hole in a workpiece;

FIG. 111 shows the tool boring a hole in a workpiece;

FIG. 112 shows an embodiment of a tool with strain relief;

FIG. 113 shows a portion of a blade of the tool which acts as a support member due to its wide cylindrical margin;

FIG. 114 shows an exploded prospective view of another alternative embodiment of the tool according to the invention disclosed and described in United States Patent Number 6,270,295;

FIG. 115 shows a longitudinal view of the tool of FIG. 114;

FIG. 116 shows a side elevational view of a blade cartridge used with the invention disclosed and described in United States Patent Number 6,270,295;

FIG. 117 shows a sectional view along line 17--17 of the tool of FIG. 115.

Referring now to the drawings in detail, wherein like numerals indicate the same elements throughout the Figures, FIG. 101 illustrates working area 10 which typically comprises a machining station 20 and a work head 12 having a workpiece 14 attached thereto using fixtures and techniques known in the industry. Workpiece 14 is illustrated as a single exemplary structure having a bore hole or similar hollow interior portion which requires honing or finishing. In operation, the tool 100 and workpiece 14 are generally rotated or moved respectively to each other as tool 100 is brought into contact with the workpiece 14 (see arrow "Y") in order to enable machining operations such as honing.

The invention disclosed and described in United States Patent Number 6,270,295 is preferably adapted for use with a machining station or center 20 having a machine spindle 24 which can be rotated at varying speeds by a power source (not shown), and which can quickly and easily receive and secure one of a plurality of tools for various operations (i.e., rotating, vibrating or oscillating). A machining station 20 typically has a synchronized system, such as an automatic tool changer (not shown), for quickly and easily interchanging and utilizing multiple matching tools at one machining station or center 20, thereby allowing machining station 20 to provide greater utility or range of operations, (i.e., they are not dedicated to a single operation or use of a single type of tool).

Any engaging assembly (e.g., 25) (i.e., clamping or otherwise securing) the proximal end 104 of the tool 100 in a generally cantilevered fashion with the machine spindle 24, such as a drawbar, a collet, a mandrel device, or other device known in the industry, can be used, so long as fluid can be provided to the tool 100 adjacent the spindle/tool interface 28 while the tool 100 is in use. A preferred engaging assembly 25 allows for quick interchange of tools and provision of fluid communication between the spindle passage 26 and the fluid distribution passageway 108 at tool/spindle interface 28 without the need for separately hooking up hydraulic lines or other fluid connections. As will be understood, the tool 100 could also be utilized in conventional applications and dedicated operations as well.

One embodiment of a tool 100 will now be described with reference to FIGS. 101A, 102, and 109 to 111. The tool 100 can include a cutting reamer (e.g., head 101, which can be detachably chucked to a spindle 24). Cutting head 101 generally includes a proximal portion 104, a middle portion 106 and a cutting portion 107.

The tool 100 preferably comprises a body and is made of a rigid material (e.g., heat treated steel or the like) configured in a longitudinally extended generally cylindrical shape. The tool 100 can be of any desired length, however, it is preferably sufficiently long to accomplish the desired machining operation. A variety of standard materials available in the industry can be used to form the tool 100 so that it is sufficiently rigid and maintains its structural integrity in the desired form during the machining operations at rotational speed from about 200 to about 20,000 revolutions per minute, and so that adverse material deformation does not occur as fluid pressure in the hollow conduit or fluid distribution system 108 increases to levels from about 200 pounds per square inch ("psi") to about 1,000 psi (1.38 x 10⁶ n/m² to 6.89 x 10⁶ n/m²). Illustrative examples of materials which might be used include aluminum, steel, or the like. For example, an aluminum alloy might be preferred where there is a need for a lighter weight tool, which might be preferred when the tool 100 is interchanged in a machine spindle 24 using an automatic tool changing system.

The cutting portion 107 can include blade 126 and/or support pad 124. When the cutting head 101, is driven to rotate in the angular direction A about its longitudinal axis L by spindle 24, blade 126 can be used to drill, cut, ream, bore or otherwise machine an opening, cut-out or hole in a workpiece (e.g., 14), while support pad 124 helps to support the cutting head 101 within the hole being machined. More specifically, support pad 124 can rotate along the inner wall of the hole that is being machined by blade 126, in order to help maintain alignment between the longitudinal axis L of the cutting head 101 and the central axis of the hole, which is being machined by blade 126, despite the force which the physical interference between the workpiece (e.g., 14) and blade 126 exerts on the cutting head 101.

This support function of support pad 124 can be especially useful when the depth of the hole being bored is quite long relative to the diameter of the hole. The hole in the barrel of a gun is one example of this type of application. The support provided by support pad 124 can also be important in boring high precision holes, for example holes with close tolerances on diameter or cylindricity. Some examples of precision holes are cylindrical bores in engine blocks, spool valves, valve bodies, precision bores and connecting rods, and wrist pin bores.

Hollow conduit 108 is preferably found within the body of tool 100 and extends or runs along the longitudinal axis L in a predetermined arrangement, preferably from proximal portion 104 to the cutting portion 107. Both the tool 100 and the conduit 108 are preferably oriented so that they share the same center longitudinal axis of rotation. As will be better understood from the description herein, this coaxial orientation of the tool 100 and the conduit 108 is preferred so that the interchanging of tools made in accordance herewith (i.e., securing the tool 100 in place and establishing fluid communication between the spindle passage 26 and the hollow conduit 108) can be accomplished quickly and automatically upon attachment of tool 100, and to preserve balance in the tool 100 so that eccentricities, which could cause vibrations during use, are held to a minimum. In this regard, off-centered routing of hollow conduit 108 within the tool 100 could be employed, but in such cases, it would be preferred to make such tubes symmetrical with the tool 100 to preserve balance during high speed tool rotation.

Forming the fluid distribution system 108 in the tool 100 and having fluid routed therethrough also provides an effective heat sink to dissipate thermal energy generated during machining operations, further minimizing undue thermal expansion. If the tool 100 were to undergo significant or uncontrolled thermal expansion, and particularly in a radial direction, the outer diameter of the tool mandrel 100 would increase and could interfere and hamper machining operations.

Referring back to FIG. 101, the work area 10 also includes a fluid supply system 11 that generally provides a source of pressured fluid to be routed through the spindle 24 (via spindle passageway 26) and through tool 100 (via the fluid distribution system 108). The fluid supply system 11, often referred to as a through-spindle coolant or fluid system, also generally includes a compressor or other system (not shown) for pumping fluid at the desired pressure and flow rate. The spindle passage 26 has a distal end which preferably automatically sealing interfaces with the tool 100 and fluid distribution system 108 at the tool/spindle interface 28. This seal might be provided in a variety of structural arrangements, including O-ring, seals and the like, and its exact structure may vary among particular applications.

Fluid communication can thereby automatically and immediately established and maintained between the spindle passageway 26 and fluid distribution passageway 108 when the tool 100 is engaged and held in place by the engaging assembly 25 using various assemblies and techniques known in the industry, as discussed previously. It should be noted that when the tool 100 is not engaged with the engaging assembly 25, mechanisms known in the industry (e.g., shut off valves or the like) can be used to terminate the flow of coolant fluid adjacent the end of the spindle passage 26.

Conduit 108 can branch into a plurality of delivery conduits for assisting in delivering fluid to either the workpiece (e.g., 14) the blade 126 and/or the support pad 124. The delivery of cooling or lubricating fluid to the machining area can assist in the dissipation of thermal energy build up in the tool 100 and/or workpiece 14 (which resulted from machining operations), the lubrication of machining operations, and/or facilitate chip or particle removal. FIG. 101A illustrates delivery conduit including side conduits, such as support side conduit 110, blade side conduit 112, and/or exit conduit 114.

Fluid tight piston 116 can be provided, and can assist in metering or controlling, or even preventing pressurized fluid from escaping out of the cutting head 101 through the side conduits, such as support side conduit 110. Likewise, fluid tight piston 118 can assist in metering or controlling, or even preventing the pressurized fluid from escaping from the cutting head 101 through the blade side conduit 112. However, escape conduit 114 preferably does allow the pressurized cooling and lubricating fluid to escape from tool 100, so that the cooling and lubricating fluid splashes out of the cutting head 101 in the directions indicated by the arrows S. (As discussed below in connection with the embodiment exemplified in FIG. 107, in some embodiments of the invention disclosed and described in United States Patent Number 6,270,295, the piston may allow fluid to leak around the blades and/or support members to help provide cooling and lubrication.)

The cooling and lubricating fluid which splashes out of escape conduit 114 (and also side conduits, as discussed above) serves to assist in cooling the tool 100 and workpiece 14 in order to help counter or dissipate heat build-up caused by the machining operation. The cooling and lubricating fluid also helps to lubricate the interface between support pad 124 and the inside wall of the hole being bored, so that support pad 124 moves more easily and smoothly along the inside walls of the hole, and also the interface between the blade 126 and the inside wall of the hole being bored, so that blade 126 moves more easily and smoothly along the inside walls of the hole. Conventional cooling and lubricating fluids, such as emulsified water or soluble coolant fluid, protein based water soluble coolant fluid, straight oil, mixtures thereof, or other available machining fluids can be used as the coolant fluid.

Blade side piston 118 preferably resides in blade side conduit 112. The pressurized cooling and lubricating fluid in the blade side conduit 112 assists in pushing blade side piston 118 generally radially outwardly against a lower part of blade cartridge 122. Because the blade cartridge 122 is preferably provided with a slot 123, the lower part of blade cartridge 122 (and the attached blade 126) will move in the direction generally indicated by R'1p when pushed by blade side piston 118.

In this way, unlike many conventional tools, the blade cartridge 122 and blade 126 are selectively biased in the radial direction, with the amount of bias being determined by the fluid pressure in blade side conduit 112. The fluid pressure in blade side conduit 112 is primarily determined by how fast fluid is pumped into the hollow conduit 108 by the pump (P) which supplies fluid from supply 11 to conduit 108. Therefore, the bias or position of blade 126 can be controlled by controlling the speed and pressure of the pump P.

More particularly, when the fluid in blade side conduit 112 is at a relatively high pressure, this high pressure will serve to push blade side piston 118 and the blade 126 relatively far out in the direction R'. (An example of this is shown in FIG. 110.) On the other hand, when the fluid pressure in the blade side conduit 112 is relatively low, the blade side piston 118 and the blade 126 will be pushed in the direction R' to a lesser extent, if at all. (An example of this is shown in FIG. 109.)

In either case, the location of the blade 126 with respect to the R' direction will be determined by the balance between the fluid pressure pushing in the R' direction, the forces pushing in the counter R' direction, and/or the centrifical force generated by rotation of tool 100. Specifically, the spring force of the slotted blade cartridge 122 and the force exerted by the workpiece on blade 126 will tend to push the blade 126 in the counter R' direction.

If the spring force of blade cartridge 122 and the amount of counter R' force exerted on blade 126 by the workpiece remains fairly constant, then the location of the blade in the R' direction can be selected and controlled by controlling the bias, which can be accomplished by controlling the fluid pressure in blade side conduit 112 and/or rotational speed of the tool 100. As such, the fluid pressure in blade side conduit 112 can be selected to determine the radius of the hole being machined and/or selected to compensate for wear of the blade 126 since the displacement direction R' of the blade 126 is substantially the same as the radial direction R, at least over the limited travel range of blade 126.

Support pad 124 can be mounted on support cartridge 120, and preferably has a slot 121 that can permit the lower part of the blade cartridge 120 and the support pad 124 some range of travel in the R" direction (which is substantially the same as the radial direction R for the limited range of travel allowed by support cartridge 120). Fluid pressure in support side conduit 110 tends to push support side piston 116 against the lower part of support cartridge 120, thereby working to bias support pad 124 in the R" direction. Therefore, the support pad 124 can be selectively biased in a manner similar to the blade member 126. Alternatively, a blade, similar to blade 126, can be mounted on support cartridge 120. A second blade can assist in supporting tool 100, and can assist in removing material from workpiece 14.

The spring force of support cartridge 120 and normal forces exerted by the workpiece (e.g., 14) on support pad 124 will tend to push back in the counter R" direction. The location of support pad 124 in the R" direction will therefore be determined by the balance of these forces. By controlling the bias of the support pad 124, its location can be controlled during machining operations.

Tool 100 preferably can compensate to some degree for differences in wear between blade 126 and support pad 124. In use, both blade 126 and support pad 124 will wear to some extent due to physical interference between these parts 124 and 126, respectively, and any workpiece (e.g., 14). Generally, blade 126 will wear faster than support pad 124 because blade 126 actually does the machining of workpieces (e.g., 14). Of course, in a conventional reamer, if the blade member wears faster than the support member(s), then the diameter and/or the alignment of the holes cut by the conventional reamer will generally be adversely affected.

However, if tool 100 is a reaming tool and if the blade 126 loses material through wear, then the biasing fluid pressure in blade side conduit 112 will tend to push blade 126 further out in the R' direction in order to compensate for this wear to some extent, and to maintain blade 126 at an appropriate radial location. Similarly, if support pad 124 loses material through wear then the biasing fluid pressure in support side conduit 110 will likewise push support pad 124 out further in the R" direction in order to compensate for the support side wear to some extent. Not only does this feature of the invention disclosed and described in United States Patent Number 6,270,295 help enhance hole precision and alignment, it also may allow more prolonged use of blades and/or support members by effectively compensating for an increased degree of wear.

Turning now to FIGS. 109 and 110, tool 100 of the invention disclosed and described in United States Patent Number 6,270,295 can be used to machine (e.g., ream) holes of different or varying diameters. In FIG. 109, the biasing fluid pressure in conduit 108, blade side conduit 112 and support side conduit 110 is maintained at a relatively low level so that the blade 126 and the support pad 124 are not pushed out very far in the R' and R" directions, respectively. Under these conditions, a hole machined by tool 100 will have a relatively small diameter.

However, by increasing the biasing fluid pressure in the conduits 108, 110 and 112, as shown in FIG. 110, the blade 126 and support pad 124 will be pushed further out in the R' and R" directions, respectively. This can result in a relatively larger diameter hole. No change in the tool hardware is necessary to accomplish this, rather only the pressure of the supply fluid must be adjusted. Of course, it is generally easier to control the pressure of the cooling and lubricating fluid (by controlling speed and/or pressure of a pump) than it is to change hardware, so the tool 100 according to the invention disclosed and described in United States Patent Number 6,270,295 objective will generally increase efficiency and productivity in applications which require holes of different diameters.

Also, although the blade 126 and support pad 124 have a limited range of travel and an accordingly limited range of possible hole diameters, fewer tool cutting heads (e.g., 101) will generally be necessary for a given application compared to tool heads, which are capable of machining only one hole diameter.

Turning now to FIGS. 109-111, tool-100 can be used to compensate for material deformation in the workpiece. FIG. 109 exemplified a hole being machined in workpiece 14 by tool 100. In the machining operation exemplified by FIG. 109, the fluid pressure in conduits 108, 110, 112 and the radial location of blade 126 and support pad 124 are maintained at a generally constant value. Under these conditions, workpiece 14 will generally bow inward near the top of the hole at the location denoted by reference numeral 16, due to material properties inherently present in workpiece 14.

As exemplified in FIGS. 110 and 111, compensation for this phenomenon can be effected by tool 100. When tool 100 is reaming the top of the hole, the biasing fluid pressure in conduits 108, 110, 112 is adjusted so that blade 126 and support pad 124 are pushed out a bit further in the radial direction R. At first, this results in the hole diameter being somewhat larger at the top of the hole as denoted by reference numeral 18. Then, as shown in FIG. 111, as the tool 100 machines (e.g., reams) further down into the workpiece 14, the biasing pressure in conduits 108, 110, 112 is gradually decreased so that the blade 126 and support pad 124 gradually retract to some degree to match the nominal diameter of the hole being machined as the tool 100 moves further down into the workpiece 14. While this is occurring, the top of the hole 16 will spring back to some degree to occupy the position denoted by reference 18. In this way, the top of the hole can take on the nominal hole diameter, because it was machined out to a somewhat larger diameter.

Of course, in order to accomplish the machining operation shown in FIGS. 110 and 111, the fluid pressure must be continually and carefully controlled with respect to the longitudinal location of the tool 100 within the workpiece 14. Preferably, appropriate control of the fluid pressure can be empirically determined and written into software which controls the tool 100. On a related note, tool 100 can be also used to machine holes in a workpiece 14 which do not have a constant diameter over or along their entire length. The fluid pressure can be controlled as the machining occurs so that various portions of the hole have larger or smaller diameters as desired. For example, tool 100 can be used to both ream a hole and provide a facing for the hole or a counter sink for the hole at the front and/or back of the workpiece 14.

Another embodiment of a tool 200 according to the invention disclosed and described in United States Patent Number 6,270,295 is exemplified in FIGS. 103 and 104. In tool 200, hollow conduit 208, blade side conduit 212, escape conduit 214, blade side piston 218, blade side cartridge 222 and blade 226 are similar to the corresponding elements of tool 100. Support members 230 and 232, respectively, are provided, mounted or otherwise affixed along the cutting portion 207 of tool 200 in a manner similar to that found in conventional tools.

While tool 200 does not provide all of the flexibility of the previously-discussed biased support pad embodiment exemplified in tool 100, it is somewhat simpler in construction and may be appropriate for applications which do not cause much wear on support members 230 and 232, respectively. In tool 200, however, wear on the blade 226 can still be effectively compensated by appropriate adjustment of the fluid pressure in conduits 208, and 212, respectively.

Another alternative embodiment of a tool 300 according to the invention disclosed and described in United States Patent Number 6,270,295 is exemplified by FIGS. 105 and 106. In tool 300, a central conduit 308 can be provided and extends along the tool 300 to the cutting portion 307 where it terminates in fluid communication with a narrow slot 338 disposed across the cutting portion 307. Blade 326 can be provided on one side of the slot 338, while support member 330 preferably is provided on the opposite side of narrow slot 338 (e.g., FIG. 106). The portion of the cutting portion 307 which includes blade 326 is called blade side 334. The other portion of the cutting portion 307 having support member 330 affixed thereto is called support side 336.

In operation, cooling and lubricating fluid can be pumped down conduit 308 and into narrow slot 338. Depending on the pressure of the fluid, blade side 334 and support side 336 will be biased away from each other to a greater or lesser extent. More specifically, blade side 334 will be biased in the R' direction by the fluid pressure, while support side 336 will be biased in the R" direction by the fluid pressure. This, in turn, causes the blade 326 and the support member 330 to be pushed in the R' and R" directions, respectively, thereby allowing control of the radial positions of the blade 326 and support member 330. In this way, the radial position of the blade member 326 and support member 330 can be controlled by controlling fluid pressure in the conduit 308 and narrow slot 338.

In tool 300, an area of removed material 340 in the body of tool 300 helps to allow relative radial deflection of the sides 334 and 336, respectively. Also generally J-shaped slots 342 and 344, respectively help allow the sides 334 and 336, respectively to separate in the radial direction (e.g., R' and/or R") under the influence of cooling fluid pressure. A slight modification of this embodiment is exemplified in FIG. 112. FIG. 112 illustrates head 600 with blade 626 and support pad 630. Slot 638 can include an alternative configuration, and/or can include a strain relief portion 642 to help provide strain relief of tool 600 in use. As will be appreciated by those skilled in the industry, other shapes and configurations of slots (e.g., 338) can be provided in the body of tool 300 in keeping with the teachings and scope of the invention disclosed and described in United States Patent Number 6,270,295.

The tool 300 may also include a seal along the longitudinal edges thereof to minimize coolant loss out of the tool 300, to assist in selectively biasing the tool 300, and to assist in directing fluid toward the end of cutting portion 307 of the tool 300. In one embodiment, tool 300 may be provided with bore holes 345 in the body of tool 300 generally along the longitudinal length thereof and positioned toward the edge thereof. Holes 345 can be filled or plugged with a corresponding shaped plug (e.g., generally longitudinally extending) 346 to effectively seal the slots 338 along their respective edges.

Furthermore, a seal 666 (such as an o-ring) and an end cap 668 may be provided on and releasably attached to the end of tool 600 to further assist in creating a pressure chamber within the tool 600 for selectively biasing the blade 626 and/or support 630 (which also can be another cutter or blade) radially outwardly for desired machining operations. So that tool 600 can be biased as desired, the end cap 668 should preferably only be attached, such as with a fastener 670, which can be a screw, bolt, or other suitable attachment means known in the machine tool industry, to either the blade side 634 or the support side 636 of the tool 600. Otherwise, as will be appreciated by those skilled in the machine tool industry, if the end cap 668 is attached to both sides of the tool 600, then the tool 600 may be prohibited from biasing as desired.

Yet another embodiment of a tool 400 is exemplified in FIG. 107. In tool 400, conduit 408 preferably is provided and extends along the center of the tool 400 to side conduits, e.g., support side conduit 410 and/or blade side conduit 412. The fluid in support side conduit 410 will push on and bias support pad 424 in the radial direction R. Similarly, fluid pressure in blade side conduit 412 will push on and bias blade cartridge 422 and blade 426 in the radial direction R. In this way, fluid pressure can be used to control the radial location of the blade 426 and support pad 424. A stop 425 should be provided to ensure that the blade cartridge 422 and/or support pad 424 included in the cutting portion 407 are not pushed entirely out of the head 401 by the fluid pressure.

In tool 400, some clearance (e.g., 427A) can be provided between support pad 424 and support side conduit 410 so that cooling and lubricating fluid can splash out in the directions indicated by the arrows S. Similarly, clearance (e.g., 427B) can be also provided between the blade cartridge 422 and the blade side conduit 412 so that cooling and lubricating fluid may splash out in the direction indicated by the arrow S. Alternatively, the support pad 424 and blade cartridge 422 may be constructed as fluid-tight pistons so that fluid escaping is minimized or eliminated to the outside of tool 400. Under this alternative, the fluid would be used solely for the purpose of biasing blade 426 and/or support pad 424.

Another embodiment of a tool 500 according to the invention disclosed and described in United States Patent Number 6,270,295 will now be described with reference to FIG. 108. In this embodiment, the blade 526 and support member 530 can be biased in the R' and R" directions, respectively, by spring 540 which is located within slot 538 in the cutting portion 507 of tool 500. Spring 540 is chosen so that its spring force provides an appropriate amount of biasing force on the blade 526 and support member 530. The spring 540 can be removed and replaced with other springs having other characteristics depending on the desired application. In this way, tool 500 can be used to machine holes of different diameters. For example, a longer spring or a stiffer spring will push out blade 526 and support member 530 further in the R' and R" directions, respectively, resulting in a larger diameter hole. Also, springs 540 can be selected to compensate for wear and tear of the blade 526 and/or support member 530. For example, a longer or stiffer spring 540 can compensate for a worn blade 526 and/or support member 530.

It is noted that the biasing force on the blades (e.g., 126) and/or support members (e.g., 130) of tools according to the invention disclosed and described in United States Patent Number 6,270,295 is preferably at least one order of magnitude higher than the cutting load or the load caused by friction from the workpiece (e.g., 14). In embodiments using fluid pressure, a high bias can be effected by making the active area of the piston (e.g., interface between the fluid and the piston) as large as possible.

It is also noted that support members of tools according to the invention disclosed and described in United States Patent Number 6,270,295 may be shaped identically to the blade member. For example, if a reamer head is configured to have three "blades" around its circumference, generally the "blade" which protrudes a small amount farther in the radial direction will act as a blade by performing most of the material removal. The other two "blades" will not remove a substantial amount of material and can act instead as support members.

Another way to help ensure that a member having a "blade" geometry will act as a support member rather than a blade is to use a blade with a relatively wide cylindrical margin relative to the diameter of the bore. This is shown in FIG. 113, where blade 702 has a wide cylindrical margin 704 relative to bore 715. Due to its wide margin, blade 702 does not remove substantially any material from the workpiece 14 and acts a support member, rather than as a blade.

Turning now to FIGS. 114-117, the invention disclosed and described in United States Patent Number 6,270,295 can also include a chip evacuation chamber 852 in the body of a tool for assisting in removing cut particles and/or chips from the machining area in a hole, and from interfering with further machining operations, especially in blind holes. Chamber 852 includes at least inlet 854 adjacent the cutting portion 807, a corresponding outlet 858 positioned proximally away from the inlet 854, preferably along the middle portion 806 and/or proximal portion 804, and a corresponding passageway 856 between inlet 854 and outlet 858. It is preferred that the chamber 852 have a larger diameter when machining an aluminum workpiece since the cut particles tend to ball up, and could easily interfere with particle removal or clog the inlet 854, outlet 858, and/or passageway 856.

One or more blade cartridges 822 and/or support cartridges (see, e.g., FIG. 117) can each be mounted or attached to tool 800 within chamber 852 using techniques and equipment known in the machine tool industry. When more than one blade cartridge and blade 826 are used, they are preferably arranged so that the cut radius of each varies. For example, one of the blade (e.g., 826A) may machine the inner portion of a hole whereas the other blade (826B) may machine the outer portion of the hole. As will be appreciated by those skilled in the art, there should be some slight overlap between blades 826A and 826B, respectively, so that the hole is machined appropriately, especially in drilling operations. Preferably, as exemplified in FIG. 116, when blade cartridge 822 has an extended longitudinal length, which may be need for stability and support in machining operation, the shaft 822A of cartridge 822 may be tapered to assist in providing for chip removal through chip removal passageway 852.

The tool 800 may also include a seal along the longitudinal edges thereof to minimize coolant loss out of the tool 800, to assist in selectively biasing the tool 800, and to assist in directing fluid toward the end of cutting portion 807 of the tool 800. In one embodiment, as shown in FIG. 114, tool 800 may be provided with bore holes 845 in the body of tool 800 generally along the longitudinal length thereof and positioned toward the edge thereof. 845 can be filled or plugged with a corresponding shaped plug (e.g., generally longitudinally extending) 846 to effectively seal the slots 838 along their respective edges.

End of section titled "The Tool".

Although various arrangements of mechanical devices for controlling the coolant pressure have been described herein, any suitable method and/or structure may be used to control the angular biasing of the tool. For example, the controls may be electric, electronic, magnetic, etc., and may or may not rely on fluid pressure. The flow of fluid from the vents/valves may be controlled electrically or electronically. Of course, the fluid may be liquid or gas. Additional vents may be used to provide greater resolution of pressure control.

## Claims

1. A tool (100) for cutting material from a workpiece (14) comprising:
at least one blade member including a blade configured to cut material from the workpiece (14), said at least one blade member being selectively biasable to at least one of a plurality of alternative use positions; and
a selective bias device configured to selectively bias said at least blade member to at least one of a plurality of alternative use positions based on angular orientation of said at least one blade member ;
wherein the selective bias device comprises a selectively pressurized fluid;
**characterised in that** said tool (100) includes a conduit (108) configured for said pressurized fluid, said conduit (108) including one or more vents configured to allow a flow of said pressurized fluid to exit said conduit (108);
the tool further comprising means for selectively covering or uncovering said one or more vents as a function of the angular orientation of said tool (100).

2. The tool according to claim 1, comprising a plurality of rotating blade members.

3. The tool according to claim 1, wherein the fluid pressure controls which of said at least one of a plurality of alternative use positions to which said at least one blade member is biased.

4. The tool according to claim 1, wherein which of the plurality of alternate use positions to which said at least one blade member is selectively biased is a function of the pressure of said pressurized fluid.

5. The tool according to claim 1, wherein the fluid pressure is a function of the angular orientation of said tool.

6. The tool (100) according to claim 1, wherein said means includes one or more vent blocks.

7. The tool (100) according to claim 1, wherein said tool comprises a circumferential surface, and said one or more vents are formed in the circumferential surface of said tool (100).

8. The tool (100) according to claim 7, further comprising a member (20) configured to selectively block one or more of said vents.

9. The tool (100) according to claim 8, wherein said member comprises a sleeve (20) disposed adjacent said circumferential surface.

10. The tool (100) according to claim 9, wherein said sleeve (20) is moveable axially.

11. The tool (100) according to claim 10, wherein said member (20) includes at least one opening, said vents not being blocked when aligned with said at least one opening.

12. The tool (100) according to claim 1 further comprising at least one support member configured to at least partially support the work piece (14) while it is being cut by the blade.

13. The tool (100) according to claim 12 wherein said bias device is further configured to selectively bias said at least support member to at least one of a plurality of alternative use positions based on angular orientation of said at least one support member.

14. A method of using a tool (100) to cut material from a workpiece (14), the method comprising the steps of:
a. providing a tool as claimed in any of claims 1-13 comprising at least one blade member including a blade, said blade member being selectively biasable to at least one of a plurality of alternative use positions;
b. rotating the blade member and the work piece (14) relative to one another so that the blade removes material from the workpiece (14);
c. selectively biasing said at least one blade member to at least one of a plurality of alternative use positions based on angular orientation of said at least one blade member relative to said workpiece (14).

15. The method of claim 14, further comprising the step of causing pressurized fluid to bear on said at least one blade member in order to selectively bias said at least one blade member.

16. The method of claim 15, further comprising the step of causing the pressure of said pressurized fluid to vary based on the angular orientation of said at least one blade member relative to said workpiece (14).

17. The method of claim 16, wherein said tool includes a circumferential surface, wherein the step of varying the pressure comprises the step of selectively covering and uncovering any of a plurality of vents formed in said circumferential surface.

## Patentansprüche

1. Werkzeug (100) zum Schneiden von Material von einem Werkstück (14), das Folgendes umfasst:
mindestens ein Messerglied mit einem Messer, das dazu konfiguriert ist, Material von dem Werkstück (14) zu schneiden, wobei das mindestens eine Messerglied selektiv in mindestens eine einer Vielzahl alternativer Gebrauchsstellungen ausgerichtet werden kann; und
eine Selektivausrichtungsvorrichtung, die dazu konfiguriert ist, das mindestens eine Messerglied selektiv in mindestens eine einer Vielzahl alternativer Gebrauchsstellungen basierend auf der Winkelorientierung des mindestens einen Messerglieds auszurichten;
wobei die Selektivausrichtungsvorrichtung ein selektiv unter Druck gesetztes Fluid umfasst;
**dadurch gekennzeichnet, dass** das Werkzeug (100) eine Leitung (108) für das unter Druck gesetzte Fluid umfasst, wobei die Leitung (108) eine oder mehrere Entlüftungsöffnungen umfasst, die dazu konfiguriert sind zuzulassen, dass ein Fluss des unter Druck gesetzten Fluids aus der Leitung (108) austreten kann;
wobei das Werkzeug weiter ein Mittel zum selektiven Verdecken oder Aufdecken der einen oder mehreren Entlüftungsöffnungen als Funktion der Winkelorientierung des Werkzeugs (100) umfasst.

2. Werkzeug nach Anspruch 1, das eine Vielzahl rotierender Messerglieder umfasst.

3. Werkzeug nach Anspruch 1, wobei der Fluiddruck regelt, welche der mindestens einen einer Vielzahl alternativer Gebrauchsstellungen, in die das mindestens eine Messerglied ausgerichtet ist.

4. Werkzeug nach Anspruch 1, wobei welche der Vielzahl alternativer Gebrauchsstellungen, in die das mindestens eine Messerglied selektiv ausgerichtet ist, eine Funktion des Drucks des unter Druck gesetzten Fluids ist.

5. Werkzeug nach Anspruch 1, wobei der Fluiddruck eine Funktion der Winkelorientierung des Werkzeugs ist.

6. Werkzeug (100) nach Anspruch 1, wobei das Mittel einen oder mehrere Entlüftungsblöcke umfasst.

7. Werkzeug (100) nach Anspruch 1, wobei das Werkzeug eine Umfangsoberfläche umfasst und die eine oder mehreren Entlüftungsöffnungen in der Umfangsoberfläche des Werkzeugs (100) ausgebildet sind.

8. Werkzeug (100) nach Anspruch 7, das weiter ein Glied (20) umfasst, das dazu konfiguriert ist, selektiv eine oder mehrere der Entlüftungsöffnungen zu versperren.

9. Werkzeug (100) nach Anspruch 8, wobei das Glied eine Hülse (20) umfasst, die angrenzend an die Umfangsoberfläche angeordnet ist.

10. Werkzeug (100) nach Anspruch 9, wobei die Hülse (20) axial beweglich ist.

11. Werkzeug (100) nach Anspruch 10, wobei das Glied (20) mindestens eine Öffnung umfasst, wobei die Entlüftungsöffnungen nicht versperrt sind, wenn sie mit der mindestens einen Öffnung fluchten.

12. Werkzeug (100) nach Anspruch 1, das weiter mindestens ein Stützglied umfasst, das dazu konfiguriert ist, das Werkstück (14) mindestens teilweise zu stützen, während es von dem Messer geschnitten wird.

13. Werkzeug (100) nach Anspruch 12, wobei die Ausrichtvorrichtung weiter dazu konfiguriert ist, das mindestens eine Stützglied selektiv in mindestens eine einer Vielzahl alternativer Gebrauchsstellungen basierend auf der Winkelorientierung des mindestens einen Stützglieds auszurichten.

14. Verfahren zum Verwenden eines Werkzeugs (100), um Material von einem Werkstück (14) zu schneiden, wobei das Verfahren folgende Schritte umfasst:
a. Bereitstellen eines Werkzeugs nach einem der Ansprüche 1-13, das mindestens ein Messerglied mit einem Messer umfasst, wobei das Messerglied selektiv in mindestens eine einer Vielzahl alternativer Gebrauchsstellungen ausrichtbar ist;
b. Rotieren des Messerglieds und des Werkstücks (14) relativ zueinander, so dass das Messer Material vom Werkstück (14) entfernt;
c. selektives Ausrichten des mindestens einen Messerglieds in mindestens eine einer Vielzahl alternativer Gebrauchsstellungen basierend auf der Winkelorientierung des mindestens einen Messerglieds relativ zum Werkstück (14).

15. Verfahren nach Anspruch 14, das weiter den Schritt des Veranlassens von unter Druck gesetztem Fluid umfasst, auf das mindestens eine Messerglied zu drücken, um das mindestens eine Messerglied selektiv auszurichten.

16. Verfahren nach Anspruch 15, das weiter den Schritt des Veranlassens des Drucks des unter Druck stehenden Fluids umfasst, sich basierend auf der Winkelorientierung des mindestens einen Messerglieds relativ zum Werkstück (14) zu verändern.

17. Verfahren nach Anspruch 16, wobei das Werkstück eine Umfangsoberfläche umfasst, wobei der Schritt des Veränderns des Drucks den Schritt des selektiven Verdeckens und Aufdeckens beliebiger einer Vielzahl von in der Umfangsoberfläche ausgebildeten Entlüftungsöffnungen umfasst.

## Revendications

1. Un outil (100) pour couper de la matière dans une pièce (14) comprenant:
au moins un organe de lame comportant une lame configurée pour couper de la matière dans la pièce (14), ledit au moins un organe de lame étant orientable de manière sélective sur au moins une d'une pluralité de diverses positions de travail ; et
un dispositif d'orientation sélective configuré pour orienter de manière sélective ledit au moins un organe de lame sur au moins une d'une pluralité de diverses positions de travail par référence à l'orientation angulaire dudit au moins un organe de lame ;
où le dispositif d'orientation sélective comporte un fluide pressurisé de manière sélective ;
**caractérisé en ce que** ledit outil (100) comporte une conduite (108) configurée pour ledit fluide pressurisé, ladite conduite (108) comportant un ou plusieurs évents configurés pour permettre à un écoulement dudit fluide pressurisé de sortir dudit conduit (108) ;
l'outil comportant en outre un moyen de couvrir ou découvrir de manière sélective lesdits un ou plusieurs évents en fonction de l'orientation angulaire dudit outil (100).

2. L'outil conforme à la revendication 1, comportant une pluralité d'organe de lame rotatifs.

3. L'outil conforme à la revendication 1, où la pression du fluide contrôle sur laquelle desdites au moins une d'une pluralité de diverses positions de travail ledit au moins un organe de lame est orienté.

4. L'outil conforme à la revendication 1, où celle de la pluralité des diverses positions de travail sur laquelle ledit au moins un organe de lame est orienté de manière sélective est en fonction de la pression dudit fluide pressurisé.

5. L'outil conforme à la revendication 1, où la pression du fluide est en fonction de l'orientation angulaire dudit outil.

6. L'outil (100) conforme à la revendication 1, où ledit moyen inclut un ou plusieurs obturateurs d'évent.

7. L'outil (100) conforme à la revendication 1, où ledit outil comporte une surface circonférentielle, et lesdits un ou plusieurs évents sont formés dans la surface circonférentielle dudit outil (100).

8. L'outil (100) conforme à la revendication 7, comportant en outre un organe (20) configuré pour obturer de manière sélective un ou plusieurs desdits évents.

9. L'outil (100) conforme à la revendication 8, où ledit organe comporte un manchon (20) disposé en position adjacente à ladite surface circonférentielle.

10. L'outil (100) conforme à la revendication 9, où ledit manchon (20) est mobile axialement.

11. L'outil (100) conforme à la revendication 10, où ledit organe (20) comporte au moins une ouverture, lesdits évents n'étant pas obturés quand ils sont alignés avec ladite au moins une ouverture.

12. L'outil (100) conforme à la revendication 1, comportant en outre au moins un organe de support configuré pour soutenir au moins partiellement la pièce (14) pendant qu'elle est coupée par la lame.

13. L'outil (100) conforme à la revendication 12, où ledit dispositif d'orientation est configuré également pour orienter de manière sélective ledit au moins un organe de support sur au moins une d'une pluralité de diverses positions de travail selon l'orientation angulaire dudit au moins un organe de support.

14. Un procédé utilisant un outil (100) pour couper de la matière dans une pièce (14), le procédé comportant les étapes suivantes :
a. fournir un outil selon une quelconque des revendications 1 à 13 comportant au moins un organe de lame y compris une lame, ledit organe de lame étant orientable de manière sélective sur au moins une d'une pluralité de diverses positions de travail ;
b. faire pivoter l'organe de lame et la pièce (14) l'un par rapport à l'autre de sorte que la lame coupe de la matière dans la pièce (14) ;
c. orienter de manière sélective ledit au moins un organe de lame sur au moins une d'une pluralité de diverses positions de travail par référence à l'orientation angulaire dudit au moins un organe de lame par rapport à ladite pièce (14).

15. Le procédé conforme à la revendication 14, comportant en outre l'étape consistant en faire porter un fluide pressurisé sur ledit au moins un organe de lame afin d'orienter de manière sélective ledit au moins un organe de lame.

16. Le procédé conforme à la revendication 15, comportant de plus l'étape consistant en faire varier la pression dudit fluide pressurisé par référence à l'orientation angulaire dudit au moins un organe de lame par rapport à la pièce (14).

17. Le procédé conforme à la revendication 16, où ledit outil comprend une surface circonférentielle, où l'étape consistant en faire varier la pression comporte l'étape de couvrir et découvrir de manière sélective un nombre quelconque d'une pluralité d'évents formés dans ladite surface circonférentielle.
